# FASCICULE DE BREVET EUROPEEN

(11) **EP 2 172 369 B1**
(45) Date de publication et mention de la délivrance du brevet: **30.11.2011**
(21) Numéro de dépôt: 09172029.2
(22) Date de dépôt: 02.10.2009
(51) Int. Cl.: B60R 13/04, B60R 19/38

(54) **Dispositif de protection d'une piece de carrosserie de vehicule automobile**
Vorrichtung zum Schutz eines Karrosserieteils eines Kraftfahrzeugs
Protective device for a body part of a vehicle

(30) Priorité: 03.10.2008 FR 0856704
(43) Date de publication de la demande: 07.04.2010
(73) Titulaire: Contardo, Dominique, 74000 Annecy (FR)
(72) Inventeur: Contardo, Dominique, 74000 Annecy (FR)
(74) Mandataire: Poncet, Jean-François

(56) Documents cités:
- DE-A1- 10 159 300
- DE-A1- 10 321 293
- DE-A1- 19 941 939
- US-A- 5 810 427
- US-A1- 2005 280 284

## Description

La présente invention concerne le domaine automobile, et concerne plus particulièrement un dispositif de protection d'une pièce de carrosserie de véhicule automobile.

De façon connue, les pièces de carrosserie à protéger, notamment les pièces de carrosserie situées sur les côtés telles que les portières ou les ailes de véhicule, sont protégées au moyen d'une baguette de protection rapportée et fixée sur leur face externe.

Cette baguette de protection comporte une épaisseur de 1 à 2 cm d'épaisseur. La baguette de protection se trouve ainsi en surépaisseur par rapport à la face externe de la pièce de carrosserie, de façon à limiter la possibilité pour un objet quelconque d'entrer en contact avec la pièce de carrosserie elle-même.

Les sources les plus importantes de chocs sur les pièces de carrosserie d'un véhicule automobile sont généralement les chariots de supermarché et les portières de véhicules stationnés au voisinage proche.

Dans le cas des coups de portières lors de l'ouverture de la portière d'un véhicule stationné à côté d'un véhicule à protéger, les baguettes de protection connues ne sont que très peu efficaces. De nombreux paramètres sont en effet à prendre en compte, tels que les hauteurs relatives des véhicules, la forme et le galbe de leurs pièces de carrosserie, etc. Il en résulte que les baguettes de protection connues ne protègent les pièces de véhicule automobile que de façon très insuffisante, la probabilité que celles-ci empêchent la portière d'un véhicule voisin d'entrer en contact avec la pièce de carrosserie à protéger étant très faible.

Les documents US 5,810,427 et DE 199 41 939 décrivent des dispositifs de protection des passagers d'un véhicule lors d'un accident. Dans ces dispositifs, une pièce entière de carrosserie est tenue à l'écart du véhicule. Lors d'un choc, la pièce de carrosserie est ramenée vers le véhicule en absorbant une partie de l'énergie du choc.

Les documents DE 103 21 293 et DE 101 59 300 décrivent un dispositif de protection d'une pièce de carrosserie selon le préambule de la revendication 1. Les moyens d'entraînement de la baguette de protection de ces documents sont peu, voire pas du tout, décrits ou rendent complexe la baguette de protection en prévoyant une baguette de protection articulée.

Les moyens d'entraînement des documents antérieurs sont donc complexes, encombrants et donc difficiles à intégrer dans une pièce de carrosserie telle qu'une portière dont l'épaisseur est fortement limitée.

Il y a donc besoin d'un dispositif de protection à moyens d'entraînement compacts et peu encombrants en épaisseur permettant toutefois de tenir écartée la baguette de protection à une distance suffisante de la pièce de carrosserie à protéger.

Un premier problème proposé par l'invention est de concevoir un dispositif de protection d'une pièce de carrosserie de véhicule automobile, qui protège efficacement contre les chocs pouvant être provoqués par des portières ou des chariots de supermarché.

Plus particulièrement, l'invention vise à concevoir un dispositif de protection capable de protéger efficacement une pièce de carrosserie de véhicule automobile contre des coups portés à l'aide de portières de formes, de hauteurs et de dimensions très diverses.

Selon un autre aspect, l'invention vise à concevoir un dispositif de protection qui soit simple à fabriquer, simple à intégrer à une pièce de carrosserie de véhicule automobile, et facilement utilisable par tout utilisateur.

L'invention cherche en outre à concevoir un dispositif de protection visant à stopper et/ou corriger le comportement désinvolte d'une personne qui, en ouvrant une portière d'un véhicule garé à côté du véhicule à protéger, serait susceptible d'endommager la pièce de carrosserie à protéger.

Pour atteindre ces objets ainsi que d'autres, l'invention propose un dispositif de protection d'une pièce de carrosserie de véhicule automobile, comportant une baguette de protection sensiblement longitudinale, dans lequel :
- la baguette de protection est déplaçable selon une première direction transversale entre une position de repos et une position de protection,
- en position de repos, la baguette de protection est tenue selon la première direction transversale à une première distance d'écartement vis-à-vis de la pièce de carrosserie,
- en position de protection, la baguette de protection est tenue selon la première direction transversale à une seconde distance d'écartement vis-à-vis de la pièce de carrosserie, la seconde distance d'écartement étant supérieure à la première distance d'écartement,
- des moyens d'entraînement sont aptes à déplacer la baguette de protection selon la première direction transversale entre la position de repos et la position de protection ;
   selon l'invention, les moyens d'entraînement comportent :
   - une platine mobile déplaçable en translation par au moins une came,
   - des moyens d'entraînement en rotation de ladite au moins une came,
   - une pluralité d'entretoises, reliant de façon fixe la baguette de protection à la platine mobile, et tenant la baguette de protection sensiblement parallèle et à distance de la platine mobile.

Un tel dispositif permet de protéger efficacement une pièce de carrosserie en stoppant tout objet à une distance plus importante que celle des dispositifs de protection connus. Le dispositif de protection selon l'invention est également esthétique puisqu'il peut être ramené en position de repos lors de l'utilisation du véhicule par son conducteur.

La came peut présenter une faible largeur tout en ayant une longueur importante. Cette faible largeur permet de conférer au dispositif de protection une faible épaisseur, sans pour autant limiter la distance selon laquelle la baguette de protection sera écartée de la pièce de carrosserie. L'intégration dans une pièce de carrosserie peu épaisse telle qu'une portière est donc facilitée tout en procurant un degré de protection suffisant.

De préférence, la seconde distance d'écartement peut être supérieure de 4 centimètres environ à la première distance d'écartement.

Une telle seconde distance d'écartement permet d'éviter avec une très grande probabilité les coups qui pourraient être portés par des portières de dimensions, de formes et de hauteurs fort différentes, sans pour autant gêner plus que de raison l'utilisateur d'un véhicule voisin lors de l'ouverture de sa portière pour monter dans ou descendre de son véhicule.

Avantageusement, le dispositif de protection peut comporter des moyens de commande aptes à commander les moyens d'entraînement.

Le déplacement entre les positions de repos et de protection de la baguette de protection est ainsi réalisé sans intervention directe de l'utilisateur sur la baguette de protection et peut être commandé à distance au moyen d'une télécommande prévue pour communiquer avec les moyens de commande.

Avantageusement, les moyens de commande peuvent piloter les moyens d'entraînement de façon à déplacer et tenir la baguette de protection en position de protection lorsque le véhicule automobile est verrouillé par l'utilisateur lorsqu'il quitte celui-ci. Le véhicule est ainsi protégé en l'absence de son propriétaire.

De façon complémentaire, on peut prévoir que les moyens de commande pilotent les moyens d'entraînement de façon à déplacer et tenir la baguette de protection en position de repos lorsque le véhicule automobile est utilisé pour se déplacer, la baguette de protection étant de préférence ramenée en position de repos lorsque le véhicule automobile est déverrouillé par son utilisateur.

Avantageusement, le dispositif peut comporter des moyens de détection aptes à détecter, lorsque la baguette de protection est en position de protection, tout effort extérieur appliqué sur la baguette de protection, lesdits moyens de détection étant couplés à des moyens de commande d'un avertisseur, de préférence l'avertisseur sonore du véhicule automobile, pour émettre un signal d'avertissement.

De préférence, la baguette de protection peut comporter deux tronçons d'extrémité qui, en position de protection, sont recourbés et dirigés vers la pièce de carrosserie de véhicule automobile. On évite ainsi qu'une personne longeant la pièce de carrosserie vienne s'embrocher accidentellement sur les extrémités de la baguette de protection. On limite également les risques d'arrachement accidentel de la baguette, les tronçons d'extrémité de la baguette rendant celle-ci moins préhensible par inadvertance lorsque quelqu'un longe la pièce de carrosserie.

Avantageusement, le dispositif de protection peut être contenu, à l'exception de la baguette de protection, dans un boîtier adapté pour être rapporté et fixé dans un logement longitudinal ouvert prévu dans la pièce de carrosserie de véhicule automobile à protéger. Le dispositif de protection peut ainsi être fabriqué séparément de la pièce de carrosserie de véhicule automobile et n'être monté sur cette dernière qu'en fin de processus de fabrication du véhicule automobile. Ceci procure une bonne modularité et une grande facilité d'intégration du dispositif de protection.

L'invention propose également une pièce de carrosserie de véhicule automobile, comportant une face externe à protéger, une face interne, et une baguette de protection sensiblement longitudinale s'étendant au moins selon une partie de la face externe à protéger, dans laquelle :
- la baguette de protection est déplaçable selon une première direction transversale entre une position de repos et une position de protection,
- en position de repos, la baguette de protection est tenue selon la première direction transversale à une première distance d'écartement vis-à-vis de la pièce de carrosserie, en étant de préférence au contact de la face externe de la pièce de carrosserie,
- en position de protection, la baguette de protection est tenue selon la première direction transversale à une seconde distance d'écartement vis-à-vis de la pièce de carrosserie, à l'écart de la face externe de la pièce de carrosserie, la seconde distance d'écartement étant supérieure à la première distance d'écartement.

Avantageusement, on peut prévoir que la pièce de carrosserie de véhicule automobile comporte :
- une platine mobile située du côté de la face interne de la pièce de carrosserie, déplaçable de préférence par des moyens d'entraînement,
- une pluralité d'entretoises, tenant la baguette de protection sensiblement parallèle et à distance de la platine mobile du côté de la face externe de la pièce de carrosserie, reliant de façon fixe la baguette de protection à la platine mobile à travers au moins une ouverture prévue dans la pièce de carrosserie.

D'autres objets, caractéristiques et avantages de la présente invention ressortiront de la description suivante de modes de réalisation particuliers, faite en relation avec les figures jointes, parmi lesquelles :
- la figure 1 est une vue schématique de dessus en coupe partielle d'un mode de réalisation du dispositif de protection selon l'invention, en position de repos ;
- la figure 2 est une vue schématique de dessus en coupe partielle du dispositif de protection de la figure 1, en position de protection ;
- la figure 3 est une vue schématique de dessus en coupe partielle d'une variante du mode de réalisation du dispositif de protection des figures 1 et 2, en position de repos ;
- la figure 4 est une vue schématique en perspective d'une pièce de carrosserie automobile à protéger ; et
- la figure 5 est une vue extérieure schématique de dessus en coupe partielle du dispositif de protection des figures 1 à 3.

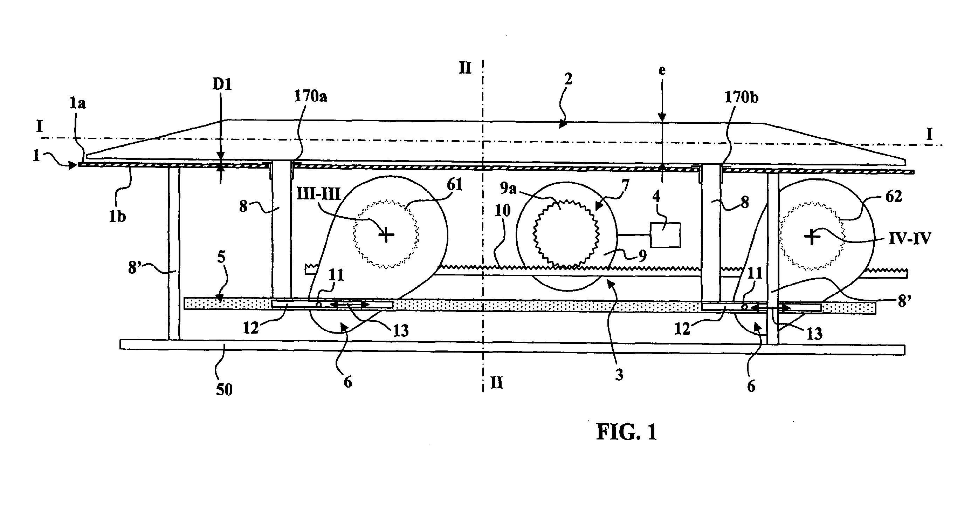

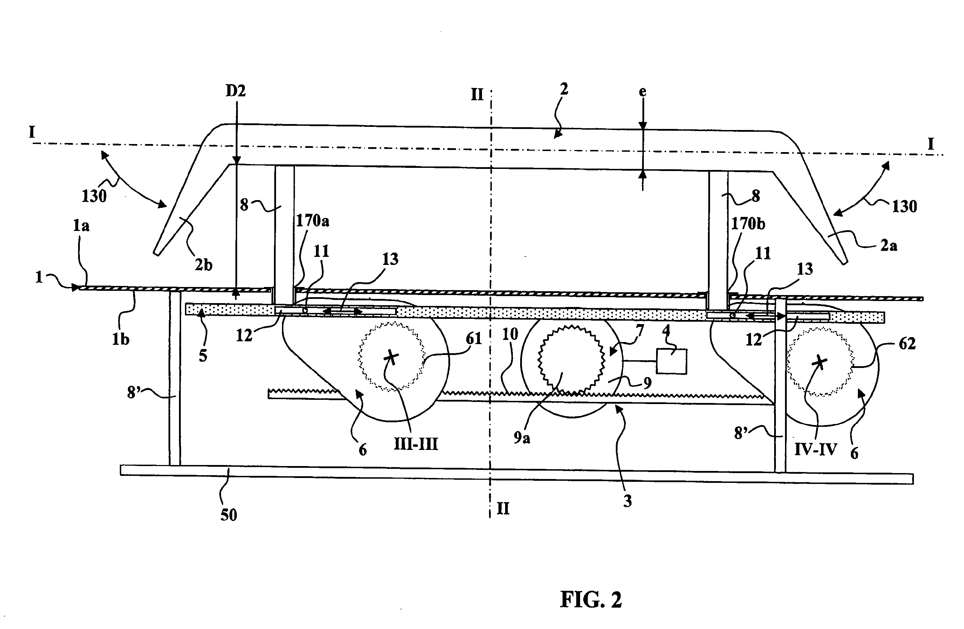

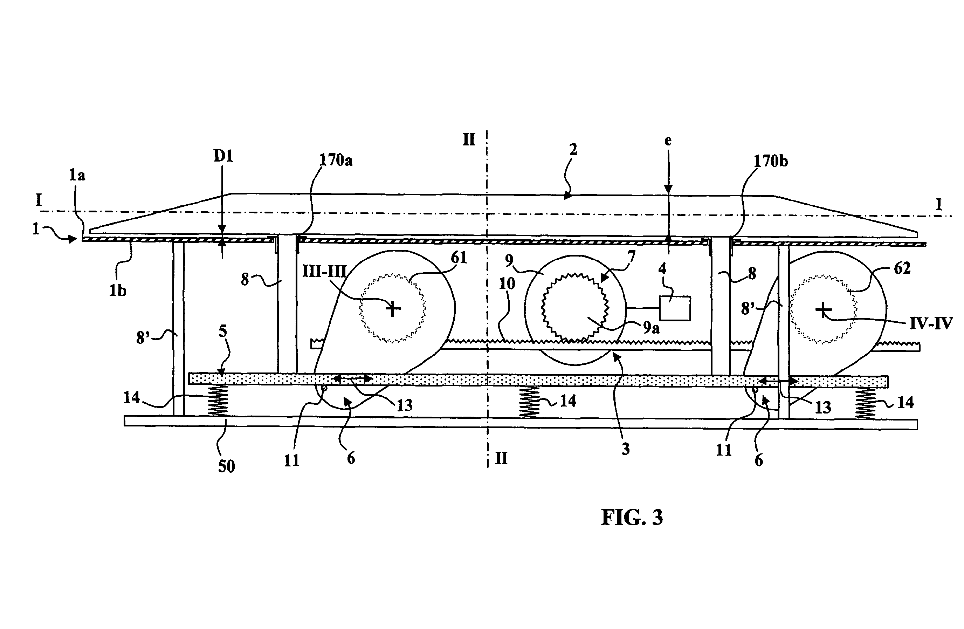

Sur les figures 1 à 3 est illustré un mode de réalisation d'un dispositif de protection d'une pièce de carrosserie 1 de véhicule automobile. La pièce de carrosserie 1 comporte une face externe 1a à protéger, une face interne 1 b et une baguette de protection 2 sensiblement longitudinale s'étendant selon une direction axiale I-I sur une partie au moins de la face externe 1 a. La baguette de protection 2 est déplaçable selon une première direction transversale II-II entre une position de repos (figures 1 et 3) et une position de protection (figure 2). En position de repos, la baguette de protection 2 est tenue selon la première direction transversale II-II à une première distance d'écartement D1 vis-à-vis de la pièce de carrosserie 1. En position de protection, la baguette de protection 2 est tenue selon la première direction transversale II-II à une seconde distance d'écartement D2 vis-à-vis de la pièce de carrosserie 1. La seconde distance d'écartement D2 est supérieure à la première distance d'écartement D1.

On voit plus particulièrement sur les figures 1 et 3 que la première distance d'écartement D1 est nulle, la baguette de protection 2 étant sensiblement au contact de la face externe 1 a de la pièce de carrosserie 1.

La seconde distance d'écartement D2 est choisie supérieure de 4 cm environ à la première distance d'écartement D1. Dans le cas de l'utilisation d'une baguette de protection 2 d'épaisseur e comprise entre 1 et 3 cm environ, le dispositif de protection est capable de stopper un objet tel qu'un chariot de supermarché ou une portière d'un véhicule voisin à au moins 5 cm environ de la face externe 1a de la pièce de carrosserie 1. Une telle distance paraît suffisamment élevée pour stopper efficacement les coups qui pourraient être portés par différents objets sur la pièce de carrosserie 1, notamment par la majeure partie des portières de véhicules voisins qui comportent des formes, hauteurs et dimensions fort différentes. On voit sur les figures 1 à 3 que le dispositif de protection comporte des moyens d'entraînement 3 aptes à déplacer la baguette de protection 2 selon la première direction transversale II-II entre la position de repos et la position de protection. Ces moyens d'entraînement 3 sont reliés à des moyens de commande 4 aptes à commander les moyens d'entraînement 3.

Sur les figures 1 à 3, les moyens d'entraînement 3 comportent :
- une platine mobile 5 déplaçable en translation selon la première direction transversale II-II par au moins une came 6,
- des moyens d'entraînement en rotation 7 de ladite au moins une came 6,
- une pluralité d'entretoises 8, reliant de façon fixe la baguette de protection 2 à la platine mobile 5, et tenant la baguette de protection 2 sensiblement parallèle et à distance de la platine mobile 5.

Les moyens d'entraînement 3 sont solidaires d'une platine fixe 50. La platine fixe 50 est immobilisée par rapport à la pièce de carrosserie 1 par l'intermédiaire d'entretoises 8'.

Plus particulièrement, la platine mobile 5 (située du côté de la face interne 1 b de la pièce de carrosserie 1) est déplaçable en translation par une pluralité de cames 6 entraînées en rotation de façon synchrone par un moteur 9. Cette synchronisation est obtenue, dans le cas du mode de réalisation représenté sur les figures 1 à 3, par un moteur 9 à roue dentée 9a coopérant avec une crémaillère 10 venant entraîner des roues dentées 61 et 62 solidaires des cames 6.

Dans le mode de réalisation des figures 1 et 2, les cames 6 ont un double effet, à savoir celui de déplacer la baguette de protection 2 en position de protection depuis la position de repos d'une part, et celui de déplacer la baguette de protection 2 en position de repos depuis sa position de protection d'autre part.

Ce double effet est assuré par des pions 11 solidaires respectivement des cames 6 et situés à l'écart des axes de rotation III-III et IV-IV des cames 6 (dont l'axe de rotation coïncide avec l'axe de rotation des roues dentées 61 et 62). Les pions 11 sont retenus captifs dans des fentes 12 longitudinales prévues sur ou dans la platine mobile 5. Les pions 11 peuvent se déplacer en translation dans les fentes 12 selon un mouvement de va-et-vient comme illustré par les double-flèches 13.

Dans le dispositif de protection illustré sur la figure 3, les cames 6 n'ont qu'un simple effet, à savoir celui de déplacer la baguette de protection 2 depuis sa position de repos vers sa position de protection. Le retour de la baguette de protection 2 depuis sa position de protection vers sa position de repos est assuré par des moyens de rappel élastiques (ressorts de rappel 14).

En alternative, on peut prévoir que les ressorts de rappel 14 assurent le déplacement de la baguette de protection depuis sa position de repos vers sa position de protection tandis que les cames 6 assurent le déplacement de la baguette de protection depuis sa position de protection vers sa position de repos.

De façon préférée, les moyens de commande 4 pilotent les moyens d'entraînement 3 de façon à déplacer et tenir la baguette de protection 2 en position de protection lorsque le véhicule automobile est verrouillé par l'utilisateur lorsqu'il le quitte. La pièce de carrosserie de véhicule automobile sera ainsi automatiquement et efficacement protégée en l'absence de l'utilisateur du véhicule automobile.

Selon un perfectionnement de l'invention, on prévoit des moyens de détection aptes à détecter, lorsque la baguette de protection 2 est en position de protection, tout effort extérieur appliqué sur la baguette de protection 2. Les moyens de détection sont couplés à des moyens de commande d'un avertisseur, de préférence l'avertisseur sonore du véhicule automobile, pour émettre un signal d'avertissement. Le signal d'avertissement peut être lumineux également en couplant les moyens de détection à des moyens de commande des phares du véhicule par exemple.

Ainsi, si quelqu'un vient à porter un coup sur la baguette de protection 2 lorsque celle-ci est en position de protection, il est émis un signal d'avertissement visant à le dissuader de poursuivre ou de recommencer. Le signal d'avertissement aura un effet de surprise et pourra également attirer des regards de toute personne se trouvant dans les environs. On limite ainsi efficacement le risque de dégradations involontaires de la pièce de carrosserie 1 et de son dispositif de protection, et on limite toute dégradation volontaire par une personne malintentionnée.

Les moyens de détection peuvent également être adaptés pour détecter toute tentative d'arrachement de la baguette de protection 2.

Les moyens de détection pourront revêtir différentes formes. Dans le cas du mode de réalisation des figures 1 à 3, il peut s'agir de capteurs d'effort intégrés dans au moins une entretoise 8 ou un capteur de couple de l'axe de rotation d'une came 6 par exemple.

Les moyens de détection et les capteurs d'effort appliqué sur la baguette de protection 2 pourront être adaptés en fonction de la nature et de la composition des moyens d'entraînement 3. Par exemple, la baguette de protection 2 peut être déplacée en position de protection par le gonflement d'une poche élastique et/ou souple intercalée entre la platine fixe 50 et la platine mobile 5. Dans ce cas, les moyens de détection peuvent comprendre un capteur de pression surveillant la pression interne de la poche élastique et/ou souple gonflée. La détection d'une augmentation de cette pression interne, signifiant qu'un effort extérieur est appliqué sur la baguette de protection 2, sera alors transmise aux moyens de commande de l'avertisseur pour émettre le signal d'avertissement.

Le fait de détecter un effort appliqué sur la baguette de protection 2 permet de ne déclencher l'avertisseur que lorsqu'il y en a effectivement besoin, c'est-à-dire lorsqu'il y a contact avec un objet extérieur (portière du véhicule voisin par exemple). Le seuil de détection d'effort peut être réglé pour permettre un contact avec une faible force. On évite ainsi tout déclenchement intempestif ou inutile de l'avertisseur, contrairement au document US 2005/0280284 dont l'avertisseur est activé sans même qu'il y ait contact avec un objet extérieur tel qu'une portière voisine par exemple. Le document US 2005/0280284 détecte en effet une distance et active un avertisseur lorsque celle-ci devient trop petite. Tout contact, même selon une force trop faible pour causer un dommage, implique nécessairement l'activation de l'avertisseur, ce qui peut être une source de nuisances importante pour le voisinage.

Dans les dispositifs de protection illustrés sur les figures 1 à 3, la baguette de protection 2 comporte deux tronçons d'extrémité 2a et 2b qui, en position de protection (figure 2), sont recourbés et dirigés vers la pièce de carrosserie 1 de véhicule automobile. On évite ainsi tout risque qu'une personne vienne accidentellement s'embrocher sur les extrémités de la baguette de protection 2 en longeant le véhicule lorsque la baguette de protection 2 est en position de protection.

De préférence, la baguette de protection 2 présente un profil longitudinal sensiblement en forme de trapèze (comme représenté sur la figure 2), et comporte des propriétés élastiques lui permettant d'être amenée de façon réversible dans une configuration où elle présente un profil longitudinal sensiblement rectiligne (comme illustré sur les figures 1 et 3) selon des mouvements illustrés par les flèches 130 (figure 2).

Une baguette de protection 2 avec de telles propriétés peut être obtenue par moulage d'une matière ayant une capacité élastique (par exemple du plastique) à laquelle est conférée une mémoire de forme. On peut par exemple réaliser une baguette de protection 2 en matière plastique moulée avec le profil longitudinal sensiblement en forme de trapèze de la figure 2. On pourra également avoir recours à tout matériau à mémoire de forme connu.

En alternative, on pourra fabriquer la baguette de protection en surmoulant dans une matière molle et déformable une mince tôle métallique à profil longitudinal sensiblement en forme de trapèze.

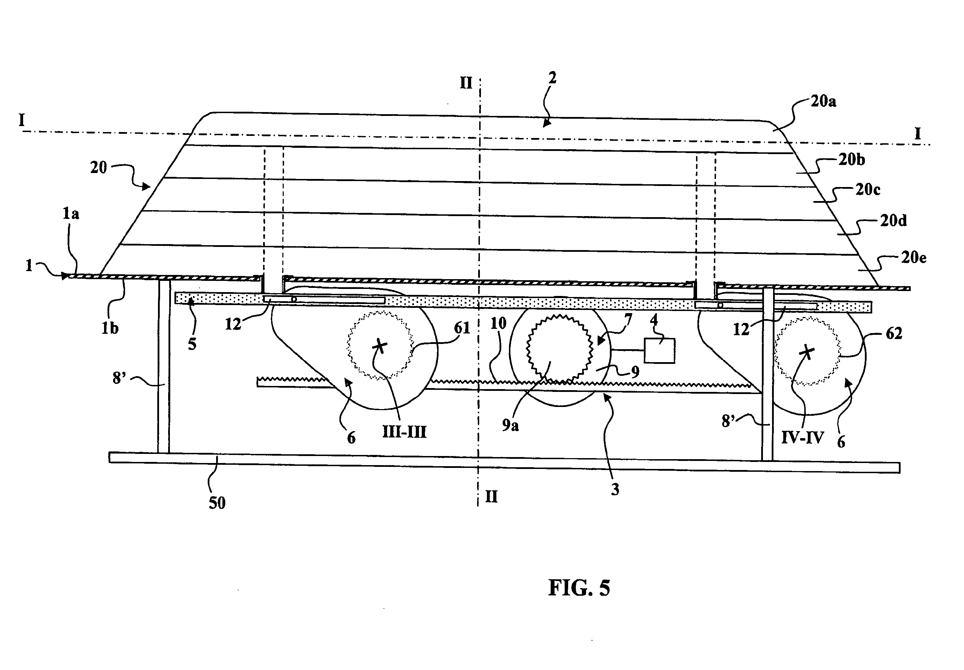

En alternative et pour conférer un aspect plus esthétique au dispositif de protection, on peut prévoir une enveloppe externe 20 comme illustré sur la figure 5. L'enveloppe externe 20 est télescopique et comporte une pluralité de secteurs emboîtés 20a-20e coulissant les uns par rapport aux autres pour pouvoir être déployés (figure 5) ou rétractés selon la première direction transversale II-II.

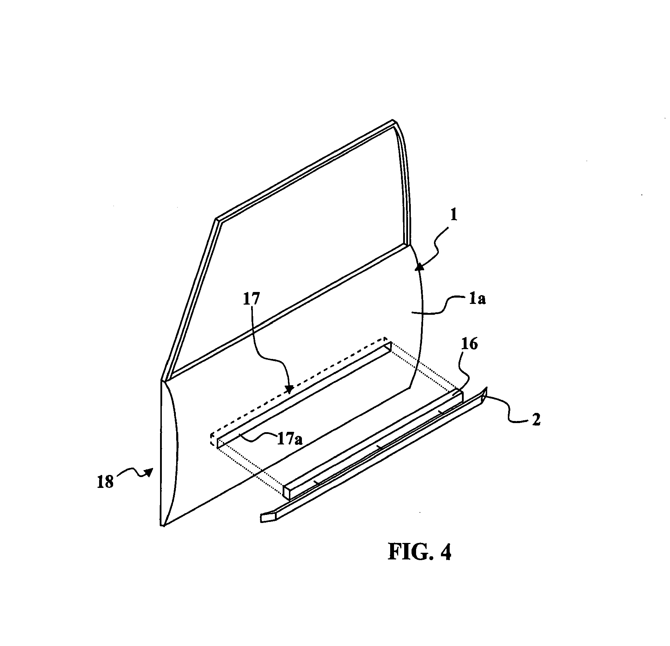

Pour assurer une installation rapide du dispositif de protection sur une pièce de carrosserie 1, on peut prévoir, comme illustré sur la figure 4, de disposer la totalité des éléments constitutifs du dispositif de protection, à l'exception de la baguette de protection 2, dans un boîtier 16 adapté pour être rapporté et fixé dans un logement 17 longitudinal, à ouverture 17a débouchant sur la face externe 1 a, prévu dans la pièce de carrosserie 1 de véhicule automobile à protéger.

Le dispositif peut être monté sur la pièce de carrosserie 1 en étant amené depuis un côté ou depuis l'autre côté de celle-ci. Sur la figure 4, le dispositif est amené par l'extérieur de la portière 18. L'ouverture 17a comporte ainsi des dimensions correspondant à celles du boîtier 16. En alternative, on peut prévoir de rapporter le boîtier 16 par l'intérieur et la baguette de protection 2 par l'extérieur, ce qui permet de faire déboucher le logement 17 sur la face externe 1a par de faibles ouvertures 170a et 170b dans la pièce de carrosserie 1 (figures 1 à 3) pour une étanchéité plus facile à assurer.

L'invention peut plus particulièrement être mise en oeuvre pour la protection des portières d'un véhicule automobile mais n'est toutefois pas limitée à ce type de pièce de carrosserie de véhicule automobile. On peut par exemple utiliser le dispositif de protection selon l'invention pour protéger toute autre pièce de carrosserie telle qu'une aile, un pare-chocs, etc.

Il est expressément souligné que le fait de prévoir des moyens de détection d'un effort extérieur appliqué à la baguette de protection 2 constitue une invention indépendante de la nature et de la composition des moyens d'entraînement 3 ainsi que de la structure particulière de la baguette de protection 2.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de protection d'une pièce de carrosserie (1) de véhicule automobile, comportant une baguette de protection (2) sensiblement longitudinale, dans lequel :
- la baguette de protection (2) est déplaçable selon une première direction transversale (II-II) entre une position de repos et une position de protection,
- en position de repos, la baguette de protection (2) est tenue selon la première direction transversale (II-II) à une première distance d'écartement (D1) vis-à-vis de la pièce de carrosserie (1),
- en position de protection, la baguette de protection (2) est tenue selon la première direction transversale (II-II) à une seconde distance d'écartement (D2) vis-à-vis de la pièce de carrosserie (1), la seconde distance d'écartement (D2) étant supérieure à la première distance d'écartement (D1),
- des moyens d'entraînement (3) sont aptes à déplacer la baguette de protection (2) selon la première direction transversale (II-II) entre la position de repos et la position de protection,
**caractérisé en ce que** les moyens d'entraînement (3) comportent :
- une platine mobile (5) déplaçable en translation par au moins une came (6),
- des moyens d'entraînement en rotation (7) de ladite au moins une came (6),
- une pluralité d'entretoises (8), reliant de façon fixe la baguette de protection (2) à la platine mobile (5), et tenant la baguette de protection (2) sensiblement parallèle et à distance de la platine mobile (5).

2. Dispositif selon la revendication 1, **caractérisé en ce que** la seconde distance d'écartement (D2) est supérieure de 4 centimètres environ à la première distance d'écartement (D1).

3. Dispositif selon l'une des revendications 1 ou 2, **caractérisé en ce qu'**il comporte des moyens de commande (4) aptes à commander les moyens d'entraînement (3).

4. Dispositif selon la revendication 3, **caractérisé en ce que** les moyens de commande (4) pilotent les moyens d'entraînement (3) de façon à déplacer et tenir la baguette de protection (2) en position de protection lorsque le véhicule automobile est verrouillé par l'utilisateur.

5. Dispositif selon l'une quelconque des revendications 1 à 4, **caractérisé en ce qu'**il comporte des moyens de détection aptes à détecter, lorsque la baguette de protection (2) est en position de protection, tout effort extérieur (F) appliqué sur la baguette de protection (2), lesdits moyens de détection étant couplés à des moyens de commande d'un avertisseur, de préférence l'avertisseur sonore du véhicule automobile, pour émettre un signal d'avertissement.

6. Dispositif selon l'une quelconque des revendications 1 à 5, **caractérisé en ce que** la baguette de protection (2) comporte deux tronçons d'extrémité (2a, 2b) qui, en position de protection, sont recourbés et dirigés vers la pièce de carrosserie (1) de véhicule automobile.

7. Dispositif selon la revendication 6, **caractérisé en ce que** la baguette de protection (2) présente un profil longitudinal sensiblement en forme de trapèze et comporte des propriétés élastiques lui permettant d'être amenée de façon réversible dans une configuration où elle présente un profil longitudinal sensiblement rectiligne.

8. Dispositif selon l'une quelconque des revendications 1 à 7, **caractérisé en ce qu'**il est contenu, à l'exception de la baguette de protection (2), dans un boîtier (16) adapté pour être rapporté et fixé dans un logement (17) longitudinal ouvert prévu dans la pièce de carrosserie (1) de véhicule automobile à protéger.

9. Pièce de carrosserie (1) de véhicule automobile, comportant une face externe (1a) à protéger, une face interne (1 b), et une baguette de protection (2) sensiblement longitudinale s'étendant au moins selon une partie de la face externe (1a) à protéger, **caractérisée en ce qu'**elle comporte un dispositif de protection selon l'une quelconque des revendications 1 à 8.

10. Pièce de carrosserie (1) de véhicule automobile selon la revendication 9, **caractérisée en ce qu'**elle comporte :
- une platine mobile (5) située du côté de la face interne (1 b) de la pièce de carrosserie (1), déplaçable de préférence par des moyens d'entraînement (3),
- une pluralité d'entretoises (8), tenant la baguette de protection (2) sensiblement parallèle et à distance de la platine mobile (5) du côté de la face externe (1a) de la pièce de carrosserie (1), reliant de façon fixe la baguette de protection (2) à la platine mobile (5) à travers au moins une ouverture (17a, 170a, 170b) prévue dans la pièce de carrosserie (1).

11. Pièce de carrosserie (1) selon l'une des revendications 9 ou 10, **caractérisée en ce qu'**elle comporte un logement (17) à ouverture (17a) débouchant sur la face externe (1a) de pièce de carrosserie (1) dans lequel est rapporté et fixé le boîtier (16) d'un dispositif de protection selon la revendication 8.

## Claims

1. Device for the protection of a bodywork part (1) of a motor vehicle, comprising a substantially longitudinal protective trim (2), in which:
- the protective trim (2) can be moved in a first transverse direction (II-II) between a rest position and a protective position,
- in the rest position, the protective trim (2) is held in the first transverse direction (II-II) at a first distance (D1) away from the bodywork part (1),
- in the protective position, the protective trim (2) is held in the first transverse direction (II-II) at a second distance (D2) away from the bodywork part (1), the second distance (D2) away being greater than the first distance (D1) away,
- operating means (3) are capable of moving the protective trim (2) in the first transverse direction (II-II) between the rest position and the protective position,
**characterised in that** the operating means (3) comprise:
- a movable plate (5) that can be moved in translation by at least one cam (6),
- rotating means (7) for rotating the said at least one cam (6),
- a plurality of spacers (8) connecting in a fixed manner the protective trim (2) to the movable plate (5) and holding the protective trim (2) substantially parallel and at a distance from the movable plate (5).

2. Device according to claim 1, **characterised in that** the second distance (D2) away is greater by approximately 4 centimetres than the first distance (D1) away.

3. Device according to either of claims 1 and 2, **characterised in that** it comprises control means (4) capable of controlling the operating means (3).

4. Device according to claim 3, **characterised in that** the control means (4) drive the operating means (3) in order to move and hold the protective trim (2) in the protective position when the motor vehicle is locked by the user.

5. Device according to any one of claims 1 to 4, **characterised in that** it comprises detection means capable of detecting, when the protective trim (2) is in the protective position, any external force (F) applied to the protective trim (2), the said detection means being coupled to control means for controlling an alarm, preferably the sound alarm of the motor vehicle, in order to emit an alarm signal.

6. Device according to any one of claims 1 to 5, **characterised in that** the protective trim (2) comprises two end sections (2a, 2b) which, in the protective position, are curved and directed towards the bodywork part (1) of the motor vehicle.

7. Device according to claim 6, **characterised in that** the protective trim (2) has a longitudinal profile substantially in the shape of a trapezium and comprises elastic properties which allow it to be brought reversibly into a configuration in which it has a substantially rectilinear longitudinal profile.

8. Device according to any one of claims 1 to 7, **characterised in that** it is contained, with the exception of the protective trim (2), in a casing (16) suitable for being fitted and fixed in an open longitudinal housing (17) provided in the bodywork part (1) of the motor vehicle to be protected.

9. Bodywork part (1) of a motor vehicle, comprising an outer face (1a) to be protected, an inner face (1b), and a substantially longitudinal protective trim (2) extending at least along a portion of the outer face (1a) to be protected, **characterised in that** it comprises a protective device according to any one of claims 1 to 8.

10. Bodywork part (1) of a motor vehicle according to claim 9, **characterised in that** it comprises:
- a movable plate (5) situated on the side of the inner face (1b) of the bodywork part (1) and preferably able to be moved by operating means (3),
- a plurality of spacers (8) holding the protective trim (2) substantially parallel and at a distance from the movable plate (5) on the side of the outer face (1a) of the bodywork part (1), connecting in a fixed manner the protective trim (2) to the movable plate (5) through at least one opening (17a, 170a, 170b) provided in the bodywork part (1).

11. Bodywork part (1) according to either of claims 9 and 10, **characterised in that** it comprises a housing (17) with an opening (17a) emerging on the outer face (1a) of the bodywork part (1) in which the casing (16) of a protective device according to claim 8 is fitted and fixed.

## Patentansprüche

1. Vorrichtung zum Schutz eines Karosserieteils (1) eines Kraftfahrzeugs, umfassend eine im wesentlichen längliche Schutzleiste (2), wobei:
- die Schutzleiste (2) in einer ersten Querrichtung (II - II) zwischen einer Ruhestellung und einer Schutzstellung verschiebbar ist,
- die Schutzleiste (2) in Ruhestellung in der ersten Querrichtung (II - II) in einem ersten Abstand (D1) zum Karosserieteil (1) gehalten wird,
- die Schutzleiste (2) in Schutzstellung in der ersten Querrichtung (II - II) in einem zweiten Abstand (D2) zum Karosserieteil (1) gehalten wird, wobei der zweite Abstand (D2) größer als der erste Abstand (D1) ist,
- Antriebsmittel (3) vorgesehen sind, um die Schutzleiste (2) in der ersten Querrichtung (II - II) zwischen der Ruhestellung und der Schutzstellung zu verschieben,
**dadurch gekennzeichnet, dass** die Antriebsmittel (3) umfassen:
- eine verstellbare Platte (5), die über wenigstens eine Nockenscheibe (6) verschiebbar ist,
- Rotationsantriebsmittel (7) für die Nockenscheibe (6),
- eine Anzahl von Stegen (8), welche die Schutzleiste (2) fest mit der verstellbaren Platte (5) verbinden und die Schutzleiste (2) auf Abstand und im wesentlichen parallel zu der verstellbaren Platte (5) halten.

2. Vorrichtung nach Anspruch 1, **dadurch gekennzeichnet, dass** der zweite Abstand (D2) um etwa 4 cm größer als der erste Abstand (D1) ist.

3. Vorrichtung nach Anspruch 1 oder Anspruch 2, **dadurch gekennzeichnet, dass** Stellmittel (4) zur Betätigung der Antriebsmittel (3) vorgesehen sind.

4. Vorrichtung nach Anspruch 3, **dadurch gekennzeichnet, dass** die Stellmittel (4) die Antriebsmittel (3) so steuern, dass sie die Schutzleiste (2) verschieben und in der Schutzstellung halten, wenn das Kraftfahrzeug von einem Benutzer abgeschlossen ist.

5. Vorrichtung nach einem der Ansprüche 1 bis 4, **dadurch gekennzeichnet, dass** Sensormittel vorgesehen sind, die in der Schutzstellung der Schutzleiste (2) jede äußere Krafteinwirkung (F) auf die Schutzleiste (2) erfassen und die mit Betätigungsmitteln für ein Alarmorgan verbunden sind, vorzugsweise ein akustisches Alarmorgan, um ein Warnsignal abzugeben.

6. Vorrichtung nach einem der Ansprüche 1 bis 5, **dadurch gekennzeichnet, dass** die Schutzleiste (2) zwei Endabschnitte (2a, 2b) hat, die in der Schutzstellung in Richtung auf das Karosserieteil (1) des Kraftfahrzeugs abgewinkelt werden.

7. Vorrichtung nach Anspruch 6, **dadurch gekennzeichnet, dass** die Schutzleiste (2) ein Längsprofil mit im wesentlichen Trapezform und elastischen Eigenschaften hat, wodurch sie reversibel in eine Form überführbar ist, in der sie ein im wesentlichen geradliniges Längsprofil aufweist.

8. Vorrichtung nach einem der Ansprüche 1 bis 7, **dadurch gekennzeichnet, dass** diese mit Ausnahme der Schutzleiste (2) in einem Gehäuse (16) untergebracht ist, das so ausgebildet ist, dass es in einen offenen und länglichen Aufnahmesitz (17) einsetzbar und darin fixierbar ist, der in dem zu schützenden Karosserieteil (1) des Kraftfahrzeugs vorgesehen ist.

9. Karosserieteil (1) eines Kraftfahrzeugs mit einer zu schützenden Außenfläche (1a), einer Innenfläche (1b) und einer im wesentlichen länglichen Schutzleiste (2), die sich über wenigstens einen Teil der zu schützenden Außenfläche (1a) erstreckt, **dadurch gekennzeichnet, dass** dieses eine Schutzvorrichtung nach einem der Ansprüche 1 bis 8 enthält.

10. Karosserieteil (1) eines Kraftfahrzeugs nach Anspruch 9, **dadurch gekennzeichnet, dass** dieses aufweist:
- eine verstellbare Platte (5), die auf der Seite der Innenfläche (1b) des Karosserieteils (1) angeordnet und vorzugsweise über Antriebsmittel (3) verschiebbar ist,
- eine Anzahl von Stegen (8), welche die Schutzleiste (2) auf der Seite der Außenfläche (1a) des Karosserieteils (1) auf Abstand und im wesentlichen parallel zu der verstellbaren Platte (5) halten und die Schutzleiste (2) fest mit der verstellbaren Platte (5) verbinden und dabei wenigstens eine in dem Karosserieteil (1) ausgebildete Öffnung (17a, 170a, 170b) durchqueren.

11. Karosserieteil (1) nach Anspruch 9 oder 10, **dadurch gekennzeichnet, dass** dieses einen Aufnahmesitz (17) mit Öffnung (17a) aufweist, die in die Außenfläche (a) des Karosserieteils (1) mündet, wobei in den Aufnahmesitz (17) das Gehäuse (16) einer Schutzvorrichtung nach Anspruch 8 eingesetzt und darin befestigt ist.
